(19) Europäisches Patentamt
European Patent Office
Office européen des brevets

(11) Publication number: 0 007 175
A1

# (12) EUROPEAN PATENT APPLICATION

(21) Application number: 79301083.6

(22) Date of filing: 07.06.79

(51) Int. Cl.³: C 01 B 21/083

(30) Priority: 08.06.78 US 913784

(43) Date of publication of application: 23.01.80 Bulletin 80/2

(84) Designated Contracting States: BE DE FR GB IT NL

(71) Applicant: AIR PRODUCTS AND CHEMICALS, INC.
P.O. Box 538
Allentown, Pennsylvania 18105(US)

(72) Inventor: Lileck, John Theodore
39 North Greenwood Street
Tamaqua, Pa. 18252(US)

(72) Inventor: Woytek, Andrew Joseph
2893 Meadowbrook Circle South
Allentown, Pa. 18103(US)

(74) Representative: Lucas, Brian Ronald
c/o Air Products Limited Coombe House St. George's Square
New Malden, Surrey(GB)

## (54) Purification of nitrogen trifluoride atmospheres.

(57) A process for purifying nitrogen trifluoride atmospheres contaminated with nitrous oxide and dinitrogen difluoride. The improvement resides in reducing the dinitrogen difluoride content in the atmosphere to less than 0.05% by volume prior to passing the atmosphere through a molecular sieve which adsorbs the nitrous oxide and any remaining dinitrogen difluoride.

EP 0 007 175 A1

Croydon Printing Company Ltd.

This invention relates to the production of nitrogen trifluoride.

The production of nitrogen trifluoride is usually accompanied by the production of inter alia nitrous oxide and dinitrogen difluoride.

Various processes have been proposed for obtaining pure nitrogen trifluoride from such mixtures. One such process includes the step of passing a mixture of nitrogen trifluoride, nitrous oxide and dinitrogen difluoride through a molecular sieve. Whilst this successfully removes the nitrous oxide, it has been noted that the nitrous oxide breaks through the molecular sieve considerably earlier than would be expected.

We have discovered that this premature breakthrough can be largely attributed to the presence of the dinitrogen difluoride and that nitrous oxide breakthrough can be delayed very considerably by ensuring that the mixture entering the molecular sieve contains less than 0.05% by volume dinitrogen difluoride.

According to the present invention there is provided a method for obtaining nitrogen trifluoride from an atmosphere comprising nitrogen trifluoride, nitrous oxide and dinitrogen difluoride, which method comprises the steps of reducing the amount of dinitrogen difluoride in the atmosphere to not more than 0.05% (by volume) and passing the remaining atmosphere through a molecular sieve to adsorb the nitrous oxide.

The atmosphere may also contain, for example, nitrogen and water. In the latter case the molecular sieve used is preferably capable of adsorbing the water.

The present invention is particularly suitable for use with atmospheres which comprises:

5-50% $NF_3$
0.05-3% $N_2F_2$
0-2% $N_2O$

Not greater than 2.5% $F_2$
1-10% HF
65-82% $N_2$ (balance)

Preferably, the remaining atmosphere contains not more than 0.01% (by volume) dinitrogen difluoride.

Advantageously, the ratio of nitrogen trifluoride to dinitrogen difluoride in the remaining atmosphere is greater than 5,000.

The molecular sieve is preferably selected from the group consisting of alkali and alkali earth metal alumino-silicates wherein the alkali metal is preferably sodium or calcium. The molecular sieve itself preferably has a crystal structure of the X or A type.

Whilst practising the present invention we have observed that the concentration of nitrogen trifluoride in the atmosphere leaving the molecular sieve appears more consistent than observed hitherto. Without wishing to be bound by theory it is believed that a portion of the dinitrogen difluoride entering the molecular sieve decomposes thereby heating the molecular sieve and reducing its capacity to adsorb nitrous oxide. If the amount of heat generated is sufficient then the nitrogen trifluoride itself will decompose with the evolution of even further heat. By maintaining the levels of dinitrogen difluoride within the limits claimed, this problem appears to be largely obviated.

In order to compare the prior art with the present invention 12 runs were carried out and the results shown in Table 1.

TABLE 1

| Run | %$NF_3$ | %$N_2F_2$ | %$N_2O$ | ratio %$NF_3$/%$N_2F_2$ | on-stream time until $N_2O$ Break-through hours |
|---|---|---|---|---|---|
| 1 | 13.90 | 0.11 | 0.043 | 132 | 6.25 |
| 2 | 10.97 | 0.096 | 0.01 | 114 | 4.5 |
| 3 | 12.69 | 0.048 | 0.01 | 262 | 9.0 |
| 4 | 12.99 | 0.045 | 0.07 | 289 | 9.0 |
| 5 | 10.19 | 0.027 | 0.01 | 377 | 11.25 |
| 6 | 12.71 | 0.026 | 0.01 | 489 | 15.00 |
| 7 | 15.00 | 0.029 | 0.01 | 517 | 14.25 |
| 8 | 11.93 | 0.013 | 0.022 | 917 | 18.00 |
| 9 | 11.94 | < 0.01 | 0.036 | 1194 | 29.25 |
| 10 | 15.29 | < 0.01 | 0.01 | 1529 | 31.0 |
| 11 | 14.20 | < 0.01 | - | 1420 | 72.0 |
| 12 | 13.51 | < 0.01 | 0.01 | 1351 | 46.0 |

In each run the atmosphere was produced by the direct fluorination of ammonia in the presence of ammonium bifluoride as described in Example 1 of US Patent No. 4,091,081. The atmosphere was then scrubbed with an aqueous solution of potassium hydroxide at 40°C. The scrubbed solution contained nitrogen, nitrogen trifluoride, nitrous oxide, and about 0.1 to 1% by volume dinitrogen difluoride.

In runs 1 to 4, 240 to 260 standard cubic feet an hour (SFCH) of the scrubbed atmosphere were passed through a first adsorber containing approximately 4.37 cubic feet of 13X (sodium) molecular sieve, and a second adsorber contained approximately 13.25 cubic feet of 5A (calcium)

molecular sieve manufactured by Union Carbide Corporation. It will be noted that breakthrough of nitrous oxide in runs 3 and 4 occurred at about the same time despite the seven fold difference in nitrous oxide content of the scrubbed gas. In this connection it will be noted that the dinitrogen difluoride content in both atmospheres was approximately the same.

In runs 5 to 12, 240 to 260 SCFH of the scrubbed atmosphere was passed through a tubular reactor of schedule 40 nickel filled with 1/8th inch diameter nickel balls at a temperature of from 400 to 500$^{o}$C to remove the dinitrogen difluoride. The residence time varied from 2 to 5 seconds. The percentage of the atmospheres quoted in runs 5 to 12 are those leaving the reactor. It will be seen that as the amount of dinitrogen difluoride decreases so the time taken for the nitrous oxide to break through the molecular sieves progressively increases. In this connection the analytical equipment used could not accurately measure concentrations of dinitrogen difluoride below 0.01% by volume. It should also be noted from the runs that when the ratio of nitrogen trifluoride to dinitrogen difluoride was about 500 prior to adsorption excellent results were obtained. Even better results were obtained when the ratio was not less than 1,000. On a product nitrogen trifluoride analysis, the ratio of nitrogen trifluoride to dinitrogen difluoride was about 9,000 for runs 10 to 12 thus showing that the dinitrogen difluoride content was substantially below 0.01%.

It was noted during the regeneration of the molecular sieve that there were temperature excursions within the adsorber in runs 1 to 4. This was evidenced by the fact that during the regeneration the temperature of the regeneration nitrogen as it passed through the adsorber often increased to 400$^{o}$F and even as high as 600$^{o}$F. These excursions were not apparent in runs 5 to 12.

The procedure described above was repeated except that an initial analysis of the atmosphere was not made. Based on the product collected, analysis showed a ratio of nitrogen trifluoride to dinitrogen difluoride of about 9935. When this atmosphere was passed through the adsorber in the same manner as in the previous runs and at the same 240 to 260 SCFH rate, the adsorber life was 56.5 hours. Based on this run and runs 9 to 12 it would appear that as the ratio of nitrogen trifluoride to dinitrogen difluoride is increased, for example above 5,000 and generally up to 10,000 greater, the adsorber life can be extended even longer.

## CLAIMS

1. A method for obtaining nitrogen trifluoride from an atmosphere comprising nitrogen trifluoride, nitrous oxide and dinitrogen difluoride using a molecular sieve, characterized in that said method comprises the step of reducing the amount of dinitrogen difluoride in the atmosphere to not more than 0.05% (by volume) before passing the remaining atmosphere through said molecular sieve to adsorb the nitrous oxide.

2. A method according to Claim 1, characterized in that said remaining atmosphere contains not more than 0.01% (by volume) dinitrogen difluoride.

3. A method according to Claim 1 or 2, characterized in that the ratio of nitrogen difluoride to dinitrogen difluoride in said remaining atmosphere is greater than 5,000.

4. A method according to any preceding Claim, characterized in that said molecular sieve is selected from the group consisting of alkali and alkali earth metal aluminosilicates.

5. A method according to Claim 4, characterized in that said alkali metal is selected from the group consisting of sodium and calcium.

6. A method according to Claim 4 or 5, characterized in that said molecular sieve has a crystal structure of the X or A type.

7. A method according to any preceding Claim, characterized in that said molecular sieve is capable of removing water if present in said atmosphere.

8. A method according to any preceding Claim, characterized in that said atmosphere contains from 5 to 50% nitrogen trifluoride by volume.

For the Applicants

Brian ~~Lucas~~

CHARTERED PATENT AGENT

European Patent Office

# EUROPEAN SEARCH REPORT

Application number
EP 79 30 1083

## DOCUMENTS CONSIDERED TO BE RELEVANT

| Category | Citation of document with indication, where appropriate, of relevant passages | Relevant to claim |
|---|---|---|
| A | US - A - 3 235 474 (J.F. TOMPKINS Jr. et al.)<br>* Claims 8-18; figure 2, column 9, line 47 - column 10, line 42 and column 7, lines 41-75 *<br>-- | |
| A | US - A - 3 356 454 (J.F. TOMPKINS Jr. et al.)<br>* Figure 2, column 9, line 46 - column 10, line 40 and column 7, lines 41-75 *<br>-- | |
| A | CHEMICAL ENGINEERING, vol. 84, no. 26, december 5, 1977 New York (US) ANONYMOUS: "Nitrogen trifluoride by direct synthesis", pages 116-17<br>-- | |
| DA | US - A - 4 091 081 (A.J. WOYTEK et al.) | |

CLASSIFICATION OF THE APPLICATION (Int. Cl.3)

C 01 B 21/083

TECHNICAL FIELDS SEARCHED (Int.Cl.3)

C 01 B 21/52

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 13-08-1979 | BREBION |